# EUROPEAN PATENT SPECIFICATION

(11) **EP 1 482 741 B1**
(45) Date of publication and mention of the grant of the patent: **03.05.2017**
(21) Application number: 04077331.9
(22) Date of filing: 24.10.2000
(51) Int. Cl.: H04N 21/414, H04N 21/488, G08B 13/196, H04N 7/18

(54) **Method and system for video monitoring**
Videoüberwachungssystem- und methode
Méthode et système de surveillance vidéo

(30) Priority: 29.10.1999 US 430309
(43) Date of publication of application: 01.12.2004
(62) Divisional of application: 00968170.1
(73) Proprietor: Nokia Technologies Oy, 02610 Espoo (FI)
(72) Inventor: Tanskanen, Erkki, 01660 Vantaa (FI)
(74) Representative: Swindell & Pearson Limited

(56) References cited:
- WO-A-97/41686
- WO-A-99/34599
- GB-A- 2 256 771

## Description

This invention relates generally to methods and systems for providing remote video communications. A particular aspect of the present invention relates to a method and system for monitoring a site using a camera located at the site.

In general, remote video systems provide visual communication between a central location and a person at a different location. An exemplary application of such remote video systems is a security system for protecting the location using a video camera which provides still or video image signals of the premises. Because of the bandwidth generally required for transmitting video signals, substantial network connection charges may be incurred if the video signal is continuously transmitted. Therefore, a network connection and transmission of video image signals is not carried out before it is necessary. A number of different detectors are utilized in the monitored site for providing information about various conditions at the site. If the information received from the monitored site is such that further efforts may be needed, an alarm signal is sent to a security guard or central alarm station. Upon receipt of the alarm signal, a direct connection may be initiated and a still or video image signal of the monitored site then transmitted to the central alarm station or to a person at a remote location.

Such a conventional video monitoring method and system has at least the following drawbacks. If the video picture is sent to a security guard at a stationary remote location, the viewed on-line video is usually not the most interesting picture or does not show the reason for the alarm. Instead, it is a picture transmitted soon after the alarm was sent. Therefore, the transmitted picture might not show what happened when the alarm was initiated. This is especially problematic if the security guard is in a motor vehicle on the road or otherwise without a direct connection to the monitored site, since there might be some significant delays in forwarding the video signal to the guard using conventional wireless networks. The International patent application WO97/41686 A1 discloses a prior art security system. A mobile platform, such as a school bus, is monitored by a number of video cameras. Video images are stored at the mobile platform and is also transmitted, as a reaction to an alarm signal generated at the mobile platform, to a remote location where the images are viewed and where a user can react to an incident at the monitored location.

Consequently, the conventional methods and systems have a problem of bow to send the picture so that a guard or other person can see what happened just when the alarm was generated. There is also a problem of how to send a satisfactory picture to a mobile terminal without incurring undesireable delays, errors, dropped frames, etc.

The present invention thus addresses video monitoring systems which are disadvantageous for at least the reasons recognized above. In particular, the present invention is directed to a method and system for video monitoring in which a person at a remote location is put into communication with a monitored site. The present invention also allows those persons at remote locations to engage in control of the video signal and other services when they are connected. For example, a security guard on the road can control the video signal using rewind and forward functions so that it shows the reason for the connection. A video segment can be selected which includes the video at the time of the connection and a small part of video before the connection. Exemplary embodiments are defined by the claims.
Fig. 1 is a generalized block diagram illustrating the major elements of a video monitoring system according to an exemplary embodiment of the invention.
Fig. 2 is an illustration of a display device used in the exemplary embodiment shown in Fig. 1.
Fig. 3 is a flowchart illustrating a method of providing a video signal according to an exemplary embodiment of the invention.

The foregoing and a better understanding of the present invention will become apparent from the following detailed description of example embodiments and the claims when read in connection with the accompanying drawings, all forming a part of the disclosure of the invention. While the foregoing and following written and illustrated disclosure focuses on disclosing example embodiments of the invention, it should be clearly understood that the same is by way of illustration and example only and is not to be taken by way of limitation, the scope of the present invention being limited only by the terms of the claims in the patent issuing from this application.

An exemplary embodiment of the present invention seeks to provide a method of video monitoring a central location in which some degree of control over the video monitoring can be performed by a person at a remote location. One possible application of the exemplary embodiment of the invention is a security system in which the video signal from a surveillance camera at a physical site may be connected with a person at a remote location upon an alarm signal or other event and the video can be controlled by the person at the remote location in order to concentrate attention on a time period of the video signal. The invention of course is not limited to such exemplary embodiment. It is more broadly directed to a diverse set of different video monitoring methods and system.

### Alarm Site Monitoring System

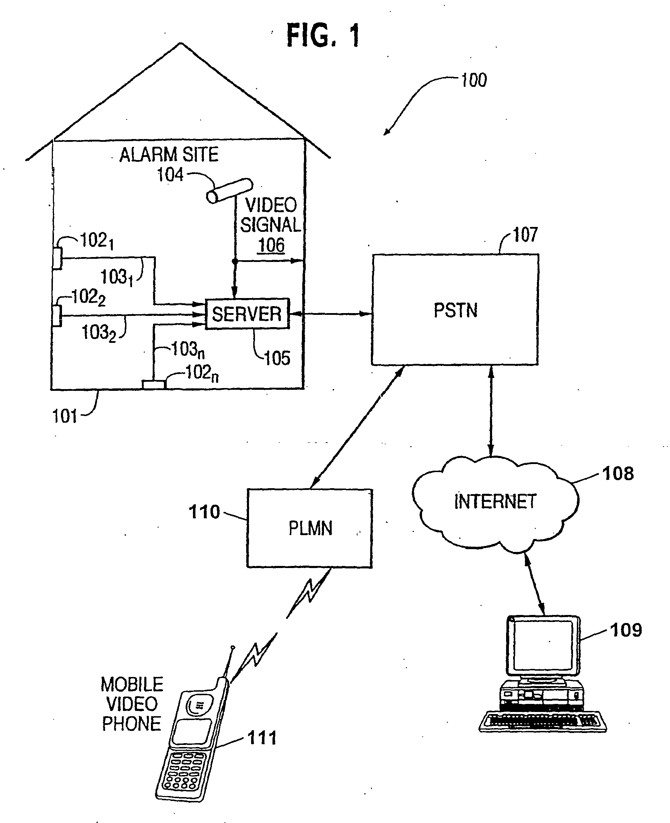

As shown in Fig. 1, a video monitoring system 100 has an alarm site 101 in which there are one or more different detectors 102ₗ - 102ₙ as known in the art for providing respective alarm signals 103ₗ - 103n. A video camera 104 provides a video signal showing the site. There may also be additional individual video cameras (not shown) for providing respective video signals of different portions of alarm site 101 or from a different viewing perspective. The video camera 104 may be of any suitable type, including a surveillance camera. The video signal can be forwarded to a recording device 105, forwarded to an external feed 106, or split and forwarded to both. In the exemplary embodiment, a video server is provided at the alarm site to both store the video signal and transmit it to remote locations. Although the video camera is constantly providing a video signal in the exemplary embodiment, it may alternatively be activated in response to an alarm or other control signal. The video signal may be of a standardized broadcast video format such as NTSC or PAL, or it may be of another video format presently existing or hereinafter developed for surveillance or other relatively low bandwidth signals. As used in this application, the term video signal includes signals having only pictorial information as well as signals having both pictorial information and audio corresponding in time with the pictorial information.

There may or may not be a real-time compression unit or encoder integrated as part of the video camera. In either case, the compressed data stream can be immediately packetized and transferred to switching system 107. However, the compressed data is preferably recorded and stored locally (in the alarm site) for latertransfer to switching system 107. In the case of a video signal with associated audio, the audio information is interleaved with the pictorial information into a single bitstream.

In an alternative embodiment of the invention, the video camera 104 may be a digital video camera used in conjunction with a personal computer or another camera conventionally used in conjunction with a computer terminal, such as, for example, an automated teller machine (ATM). The camera can be attached to, located nearby or enclosed within the personal computer or computer terminal. The video signal generated by such a camera may be in a format more easilyprocessed by a personal computer, such as MPEG-2, MPEG-3 or MPEG-4, rather than in a NTSC, PAL or surveillance camera format.

### Video Compression

In the exemplary embodiment, it is expected that the video signal provided by camera 104 will have to be compressed internally or externally since many of the transmission channels are narrowband channels with low bit rates. For example, internet connections are usually limited to about 56 kilobits per second. Therefore, a high degree of compression is necessary for the video to be transmitted over those channels. The video of the resulting compressed data stream will have a resolution of about 176 x 144 pixels and a frame rate of up to 15 Hz. Although the compression process is somewhat computationally intensive, the decompression process at the receiving end of the transmission is much less intensive and amenable to devices, such as mobile stations, with relatively low computational power.

If camera 104 is not configured to provide a low bit rate video signal, a separate video compression unit located at the alarm site, such as an ITU-T H.261, H.263 or MPEG 4 encoder, compresses the video signal from video camera 104. According to these compression techniques, each frame of the video signal will have a time stamp associated with it. Other low bandwidth compression systems may also be used. See, for example, "Solution for low bit-rate video coding" by M. Karcewicz et al, Advance, Vol. 8, September 1997. Since many applications of the invention in a security environment will emphasize surveillance, the compression process may utilize a motion-sensitive variable compression algorithm providing a high degree of compression in the absence of movement in the picture and a low degree of compression in the presence of movement.

### Video Server

A variety of arrangements can be made for recording the video at the alarm site. In the exemplary embodiment, recording device 105 is a video server which stores the video signal from camera 104 in a large capacity video database and then provides the video for later transmission upon demand. It is also configured to receive the various alarm signals from the detectors at the alarm site. When the video signal is transferred by the server as described below in response to an alarm, data indicating the time of the alarm and the correspondence between frames of the video signal and the time of said alarm is included in the video signal.

The server is preferably a dedicated video server capable of transmission over HTTP, TCP and UDP protocols. In the case of UDP, the server packetizes the video signal from the camera in order to enable recovery from packet losses during wireless transmission. The server can preferably adjust the video signal (by changing the resolution and/or frame rate) to best suit the available network bandwidth and avoid congestion and loss of video in any particular connection. In particular, as explained below the server supports a variety of controls over the part of the video signal transmitted utiling fast-forward and fast-rewind operations. The server may support real-time video streaming of the video as well as this store and forward serving of video. Preferably, the server utilizes a buffer for temporarily storing the most recent portion of the video signal received from camera 104. In response to an alarm signal, the buffered video signal can be transmitted more quickly than a video signal stored in the large capacity video database. Rather than a dedicated video server, a web server can be used to transmit video over HTTP. Although less expensive, such a server is disfavored since flow control such as fast-forward and rewind can typically only be accomplished with advanced and complicated programming.

### Transmission of Video Signal

The video signal from video camera 104 at alarm site 101 is provided to switching system 107 of a network (other elements of the network are now shown for the sake of simplicity) such as the public service telephone network (PSTN). Alternatively, the switching system can have some intelligence and functionality built into it for performing the functions of the video unit. The video signal can be bidirectionally transferred between switching system 107 and public land mobile network (PLMN) 110. A wireless link can be established between PLMN 110 and a mobile station 111 to forward the video signal to the mobile station 111. The video signal can also be forwarded, for example, from switching system 107 to a stationary computer, including monitor, 109 via the internet 108. While certain devices are used in the exemplary embodiment, any suitable device, either presently existing or hereafter developed, may be utilized to receive and display the video. As discussed herein, the client can be a standalone, dedicated, device or can have the functionality embedded within other communications technology such as a web browser.

In the exemplary embodiment using a server at the monitored site, the stationary computer or mobile station can interact with the server using client-server connections. In a PSTN network, the connections are conventional point-to-point switched connections. The video is transferred from the server in the monitored site to the client through the network. In the reverse direction, the client (computer, mobile station, or other suitable device) can control some operations of the server using control protocols. The client can, for example, control some parameters of the connection, such as bit rate, degree of error correction, etc.

In particular, in the exemplary embodiment, the server is configured to allow each respective client to designate parameters of the connection in order to optimize the communication link to compensate for the communication medium. For example, the exemplary embodiment of Fig. 1 shows an internet connection to a computer and wireless connection to a mobile station. Signals can be sent from the computerto the switching system, either directly as shown in the exemplary embodiment of Fig. 1, or through internet 108. Each of these communication links have significantly different characteristics and the video transmission is controlled accordingly.

### Internet Video Transmission

The internet uses transmission control protocol (TCP) transport layer in which packets dropped during transmission are retransmitted. Thus, a client receiving the video signal via the internet must deal with the fact that the channel throughput may be highly variable due to TCP packet retransmission. The video can either be entirely downloaded first and then displayed, displayed after some buffering is done to control the transmission rate, or streamed despite errors, dropped frames, or pauses in the video.

UDP introduces relatively stable throughput, but also the possibility of packet losses. Consequently, the client must be able to recover from packet losses and possibly conceal the lost video content. Despite the concealment, the quality of the reconstructed video suffers somewhat. On the other hand, the playback of the clip is likely to happen in real-time without annoying pauses. Also, a computer of a security agency may utilize a firewall which do not permit UDP, in which case, adjustments have to be made for UDP.

As specific examples of internet video systems, RealSystem G2™ from RealNetworks and NetShow 3.0 or 4.0 from Microsoft may be used. RealSystem uses the Real Time Streaming Protocol (RTSP) and data, such as time of the alarm, location, etc., can be sent along with the video information. This data can be displayed along with the video.

The client terminal may consist of a personal computer (PC). It should be capable of communicating with the server through the internet and over a network such as, for example, the public service telephone network (PSTN).

### Wireless Video Transmission

Communication links in wireless cellular networks can experience high amounts of error, loss of signal strength, etc., not found in wired networks. In addition to historically low bit rates for data communication, these disadvantages have conventionally rendered video transmission in a wireless cellular network a practical impossibility. However, newly developed networks such as the Global System for Mobile Communications (GSM) phase 2+ in Europe and the Universal Mobile Telecommunication System (UMTS) have increased the data rates to such an extent that the quality of video signals can be made acceptable. Video transmission can be carried out using, for example, HighSpeed Circuit Switched Data (HSCSD) and General Packet Radio Services (GPRS).

HSCSD offers two basic connection types, namely transparent and non-transparent, distinguished by their way of correcting transmission errors. In a transparent connection, error corection is done entirely by a forward error correction mechanism. Consequently, the available throughput is constant and the transmission delay is fixed, but the transmitted data are likely tocontain bit inversion errors. In the non-transparent approach, the Radio Link Protocol (RLP) is used to provide retransmission in case of detected errors in the receiving end. Consequently, a non-transparent connection is error free, but through put and transmission delay is varying.

UDP over transparent HSCSD introduces bit errors in addition to possible packet losses. However, UDP can detect and indicate these bit errors. The erroneous packets can then be discarded in the receiving end. However, the decoders might utilize the erroneous data in concealment and it might be worthwhile to try to decode the erroneous packets, too. UDP over non-transparent HSCSD is free of bit errors but introduces varying delay due to retransmission. Thus, this approach is likely to perform worse than UDP over transparent HSCSD.

In the TCP over transparent HSCSD approach, the unit to retransmit is a TCP packer, whereas in the TCP over non-transparent HSCSD approach, the unit to retransmit is a GSM frame. Since a GSM frame contains fewer bits than a TCP packet, the retransmission of a TCP packet is likely to cause retransmission of already correctly transmitted data therefore reducing the channel throughput. Thus, the exemplary embodiment uses TCP over non-transparent HSCSD.

GPRS is a packet switched data service. It provides multiple Quality of Service (QoS) levels with varying service reliability and more optimal network usage than in HSCSD. This enables flexible support for connections of different parameters. For example, the video signal could be transmitted with various degrees of error protection and delay.

The mobile stations in the wireless network can be phone units configured to receive and display video signals as well as voice. These video display capabilities may support any suitable wireless video transmission standard or proprietary system or may include a web browser, such as Netscape Navigator or Microsoft Internet Explorer, supporting a standardized or proprietary Internet streaming technology. They may also be laptop computers or communicator-like terminals with internet access, in which case the above-mentioned internet transmission methods can be used over the wireless network. Such a device preferably is able to carry out all of the video server control functions of a client discussed below as well as the communication protocols to set-up connection. In particular, a remote access system is included so that the mobile phone or other terminal equipment can be remotely accessed by control signals included in the digital service information to, for example, turn the equipment on and off or at least contact the equipment while it is operating is a suspended mode of operation.

### Video Client

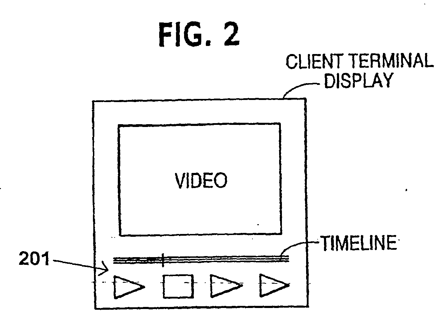

Fig. 2 shows an example of a graphical user interface for the display with some functions of a client device receiving the video signal. The display can be a fixed station (e.g., a desktop computer) or part of a mobile station.

The client also has content controls 201 which permit the client to select a clip of video to be displayed In particular, the controls 201 permit the client to control the display of video by selecting functions of PLAY, STOP, REWIND, FORWARD, FAST FORWARD and FAST REWIND in much the same manner as a video cassette recorder. In addition, the client can control the video information by reference to a time line or time stamp information associated with the video. The controls 201 may also allow the client to designate a time lapse loop. Of course, the client is configured to decompress and demultiplex the video signal into its audio, video and time stamp components and display the video and play the audio continually as the video signal is being received.

### Monitoring Method

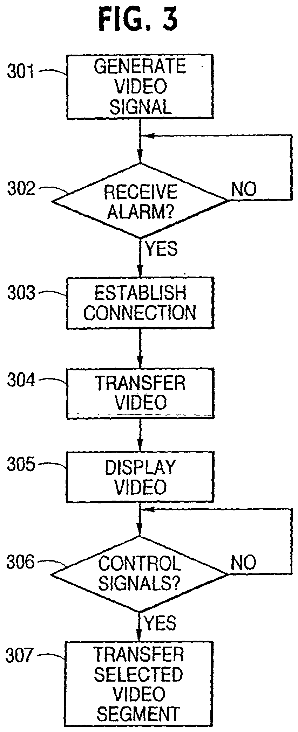

The monitoring method according to an example embodiment of the invention is illustrated by the flowchart in Fig. 3. In the exemplary embodiment of the invention, a site or premises to be monitored has a camera which generates a video signal of the site (step 301). The site has one or more detectors for providing an alarm signal(s). The alarm signal(s) is transferred to a central alarm station at the switching station 107 where the alarm signals from a plurality of monitored sites are collected. Upon receipt of an alarm (step 302), a connection is set up with the alarm site (step 303). The video picture is transferred as soon as possible to the switching station (step 304). In order to expedite transfer of the picture signal, a short length of video is buffered at the same time it is recorded.

The video from the alarm site can be displayed on a terminal using the internet or an intranet, ISDN, PSTN or wireless network communication lines directly for a point-to-point connection (step 305). The video signal preferably includes a time stamp indication of the time of an alarm for review simultaneously with the video signal. Control signals and commands are transferred from the computer to the switching station which instruct the switching station to transmit the appropriate video data just at the alarm time to determine why the alarm occurred (step 306). This is preferably accomplished by the user clicking on part of the user interface to transmit a command or instruction to the switching station which causes the switching station to in turn respond by transferring the video data according to the user selection (step 307). For example, if the user pushes the button for rewind, a command is sent to the switching station which represents the user selection of a rewind function and then the video data is virtually rewound. In this way, the person can review the video not only at the time that he calls in, but also at the moment of the alarm.

While the foregoing has described what are considered to be example embodiments of the invention, it is understood that various modifications may be made therein and that the invention may be implemented in various forms and embodiments, and that it may be applied in numerous applications, only some of which have been described herein. It is intended by the following claims to claim all such modifications and variations.

## Claims

1. A method comprising:
displaying a video according to a video signal on a mobile display device (111) that is transferred in response to an alarm signal from a video server (105) at a monitored site (101) to the mobile display device (111) over a wireless connection;
enabling selection of a command from a user interface of the mobile display device (111) causing sending of control signals from the mobile display device (111); and
displaying on the mobile display device (111) a further video according to a portion of video signal, transferred to the mobile display device 111 in response to the control signals sent from the mobile display device (111), said portion of video signal having been generated during a time period at least partly covering time prior to said alarm signal.

2. The method recited in claim 1, comprising generation of control signals in response to user inputs entered at the mobile display device (111) after at least a portion of the video is displayed on the mobile display device (111).

3. The method recited in claim 1 or 2, comprising displaying a time line corresponding to said portion of the video signal.

4. The method recited in claim 3, wherein the mobile display device (111) displays content controls (201) to select the start time of a further video to be displayed on the display device (111) according to a portion of stored video signal.

5. The method according to any of claims 1 to 4, comprising controlling the wireless connection by sending parameters of the connection from the mobile station (111) to the video server (105).

6. A method comprising:
generating by a video camera (104) a video signal of a site (101);
storing the video signal in a video server (105) at the site (101);
in response to an alarm signal generated upon detection of an event at the site (101), transferring the video signal from the site (101) to a mobile display device (111) over a wireless connection;
in response to control signals received from the mobile display device (111), transferring (307) a portion of stored video signal to the mobile display device (111), said portion of video signal having been generated during a time period at least partly covering time prior to said alarm signal.

7. The method according to claim 6, comprising including in said video signal, data indicating the time of said alarm signal and the correspondence between frames of the video signal and the time of said alarm signal.

8. The method according to claim 6 or 7, comprising temporarily storing the most recent portion of video signal from the video camera (104) in a buffer.

9. The method according to any of claims 1 to 8, wherein the video signal includes pictorial and audio information.

10. The method according to any of claims 1 to 9, wherein said wireless connection is at least one in a group comprising: HSCSD, GPRS and UMTS.

11. A mobile station (111) comprising.
a display for display of a video according to a video signal that is transferred in response to an alarm signal (103) from a monitored site (101) to the mobile station (111) substantially in real-time with the generation of the video signal; and
a user interface for enabling selection of a command causing sending of control signals from the mobile station (111), wherein the mobile station is configured to display on the display thereof a further video according to a further video signal transferred from a video server (105) in the monitored site (101) in response to said control signals, said further video signal being generated during a time period at least partly covering time prior to said alarm signal (103).

12. A mobile station as claimed in claim 11, further comprising means for comprising generation of control signals in response to user inputs entered at the mobile display device (111) after at least a portion of the video is displayed on the mobile display device (111).

13. A video server, comprising:
a video database for staring video signal generated by a video camera (104) at a monitored site (101); and
transfer means for transferring, in response to an alarm signal (103) generated upon detection of an event; at the monitored site (101), the video signal from the monitored site (101) to a mobile display device (111) over a wireless connection substantially in real-time with the generation of the video signal, and for transferring, in response to control signals from the mobile station (111), a further video signal fetched from the video database, said further video signal being generated during a time period at least partly covering time prior to said alarm signal (103).

14. A video server as claimed in claim 13ᵣ further comprising means for including in said video signal, data indicating the time of said alarm signal and the correspondence between frames of the video signal and the time of said alarm signal.

15. A system for providing video signal to a mobile station (111) according to claim 11 or 12 from a video server (105) according to claim 13 or 14, the system further comprising:
communication means (106, 107) for communication of video signal from the monitored site (101) to a remote location; and
at least one detector (102) at the monitored site (101) for providing the alarm signal (103).

## Patentansprüche

1. Verfahren, das Folgendes umfasst:
Anzeigen eines Videos gemäß einem Videosignal auf einer mobilen Displayeinrichtung (111), das als Reaktion auf ein Alarmsignal von einem Videoserver (105) an einem überwachten Ort (101) über eine drahtlose Verbindung zu der mobilen Displayeinrichtung (111) übertragen wird;
Ermöglichen der Wahl eines Befehls von einer Benutzerschnittstelle der mobilen Displayeinrichtung (111), der das Senden von Steuersignalen von der mobilen Displayeinrichtung (111) bewirkt; und
Anzeigen auf der mobilen Displayeinrichtung (111) eines weiteren Videos gemäß einem Teil des Videosignals, als Reaktion auf die von der mobilen Displayeinrichtung (111) gesendeten Steuersignale zu der mobilen Displayeinrichtung (111) übertragen, wobei der Teil des Videosignals während einer Zeitperiode generiert worden ist, die eine Zeit vor dem Alarmsignal zumindest teilweise abdeckt.

2. Verfahren nach Anspruch 1, umfassend Generieren von Steuersignalen als Reaktion auf an der mobilen Displayeinrichtung (111) eingegebenen Benutzereingaben, nachdem mindestens ein Teil des Videos auf der mobilen Displayeinrichtung (111) angezeigt wird.

3. Verfahren nach Anspruch 1 oder 2, umfassend Anzeigen einer Zeitlinie entsprechend dem Teil des Videosignals.

4. Verfahren nach Anspruch 3, wobei die mobile Displayeinrichtung (111) Inhaltssteuerelemente (201) anzeigt zum Wählen der Startzeit eines auf der Displayeinrichtung (111) anzuzeigenden weiteren Videos gemäß einem Teil des gespeicherten Videosignals.

5. Verfahren nach einem der Ansprüche 1 bis 4, umfassend Steuern der drahtlosen Verbindung durch Senden von Parametern der Verbindung von der mobilen Station (111) zu dem Videoserver (105).

6. Verfahren, das Folgendes umfasst:
Generieren eines Videosignals eines Orts (101) durch eine Videokamera (104);
Speichern des Videosignals in einem Videoserver (105) an dem Ort (101);
als Reaktion auf ein bei Detektion eines Ereignisses an dem Ort (101) generierten Alarmsignals, Übertragen des Videosignals von dem Ort (101) zu einer mobilen Displayeinrichtung (111) über eine drahtlose Verbindung;
als Reaktion auf von der mobilen Displayeinrichtung (111) empfangene Steuersignale, Übertragen (307) eines Teils des gespeicherten Videosignals zu der mobilen Displayeinrichtung (111), wobei der Teil des Videosignals während einer Zeitperiode generiert worden ist, die eine Zeit vor dem Alarmsignal zumindest teilweise abdeckt.

7. Verfahren nach Anspruch 6, umfassend Aufnehmen in das Videosignal von Daten, die die Zeit des Alarmsignals und die Übereinstimmung zwischen Einzelbildern des Videosignals und der Zeit des Alarmsignals anzeigen.

8. Verfahren nach Anspruch 6 oder 7, umfassend vorübergehendes Speichern des jüngsten Teils des Videosignals von der Videokamera (104) in einem Puffer.

9. Verfahren nach einem der Ansprüche 1 bis 8, wobei das Videosignal Bild- und Audioinformationen enthält.

10. Verfahren nach einem der Ansprüche 1 bis 9, wobei die drahtlose Verbindung mindestens eine ist in einer Gruppe umfassend: HSCSD, GPRS und UMTS.

11. Mobile Station (111), umfassend:
ein Display für die Anzeige eines Videos gemäß einem Videosignal, das als Reaktion auf ein Alarmsignal (103) von einem überwachten Ort (101) zu der mobilen Station (111) im Wesentlichen in Echtzeit mit der Erzeugung des Videosignals übertragen wird; und
eine Benutzerschnittstelle zum Ermöglichen der Wahl eines Befehls, der das Senden von Steuersignalen von der mobilen Station (111) bewirkt, wobei die mobile Station konfiguriert ist zum Anzeigen auf dem Display davon eines weiteren Videos gemäß einem von einem Videoserver (105) an den überwachten Ort (101) als Reaktion auf die Steuersignale übertragenen weiteren Videosignals, wobei das weitere Videosignal während einer Zeitperiode generiert wird, die eine Zeit vor dem Alarmsignal (103) zumindest teilweise abdeckt.

12. Mobile Station nach Anspruch 11, weiterhin umfassend Mittel zum Umfassen der Erzeugung von Steuersignalen als Reaktion auf an der mobilen Displayeinrichtung (111) eingegebenen Benutzereingaben, nachdem mindestens ein Teil des Videos auf der mobilen Displayeinrichtung (111) angezeigt wird.

13. Videoserver, der Folgendes umfasst:
eine Videodatenbank zum Speichern eines durch eine Videokamera (104) an einem überwachten Ort (101) generierten Videosignals; und
Übertragungsmittel zum Übertragen, als Reaktion auf ein bei Detektion eines Ereignisses an dem überwachten Ort (101) generiertes Alarmsignal (103), des Videosignals von dem überwachten Ort (101) zu einer mobilen Displayeinrichtung (111) über eine drahtlose Verbindung im Wesentlichen in Echtzeit mit der Generierung des Videosignals und zum Übertragen, als Reaktion auf Steuersignale von der mobilen Station (111), eines von der Videodatenbank geholten weiteren Videosignals, wobei das weitere Videosignal während einer Zeitperiode generiert wird, die eine Zeit vor dem Alarmsignal (103) zumindest teilweise abdeckt.

14. Videoserver nach Anspruch 13, weiterhin umfassend Mittel zum Aufnehmen in das Videosignal von Daten, die die Zeit des Alarmsignals und die Übereinstimmung zwischen Einzelbildern des Videosignals und der Zeit des Alarmsignals anzeigen.

15. System zum Liefern eines Videosignals an eine mobile Station (111) gemäß Anspruch 11 oder 12 von einem Videoserver (105) nach Anspruch 13 oder 14, wobei das System weiterhin Folgendes umfasst:
Kommunikationsmittel (106, 107) zur Kommunikation eines Videosignals von dem überwachten Ort (101) an eine abgesetzte Stelle; und
mindestens einen Detektor (102) an dem überwachten Ort (101) zum Liefern des Alarmsignals (103).

## Revendications

1. Procédé consistant à :
afficher une vidéo en fonction d'un signal vidéo sur un dispositif d'affichage mobile (111) qui est transféré à la suite d'un signal d'alarme provenant d'un serveur vidéo (105) sur un site surveillé (101) au dispositif d'affichage mobile (111) sur une connexion sans fil ;
permettre une sélection d'une commande à partir d'une interface utilisateur du dispositif d'affichage mobile (111) provoquant l'envoi de signaux de commande à partir du dispositif d'affichage mobile (111) ; et
afficher sur le dispositif d'affichage mobile (111) une autre vidéo en fonction d'une partie d'un signal vidéo, transféré au dispositif d'affichage mobile (111) à la suite des signaux de commande envoyés à partir du dispositif d'affichage mobile (111), ladite partie du signal vidéo ayant été générée pendant une période de temps couvrant au moins partiellement le moment avant ledit signal d'alarme.

2. Procédé selon la revendication 1, comprenant la génération de signaux de commande à la suite de saisies d'utilisateur entrées au niveau du dispositif d'affichage mobile (111) après qu'au moins une partie de la vidéo est affichée sur le dispositif d'affichage mobile (111).

3. Procédé selon la revendication 1 ou 2, consistant à afficher une frise chronologique correspondant à ladite partie du signal vidéo.

4. Procédé selon la revendication 3, dans lequel le dispositif d'affichage mobile (111) affiche des commandes de contenu (201) pour sélectionner l'heure de début d'une autre vidéo qui doit être affichée sur le dispositif d'affichage (111) en fonction d'une partie d'un signal vidéo stocké.

5. Procédé selon l'une quelconque des revendications 1 à 4, consistant à commander la connexion sans fil par envoi de paramètres de la connexion à partir de la station mobile (111) au serveur vidéo (105).

6. Procédé consistant à :
générer au moyen d'une caméra vidéo (104) un signal vidéo d'un site (101) ;
stocker le signal vidéo dans un serveur vidéo (105) se trouvant sur le site (101) ;
à la suite d'un signal d'alarme généré à la détection d'un événement au niveau du site (101), transférer le signal vidéo du site (101) à un dispositif d'affichage mobile (111) sur une connexion sans fil ; à la suite de signaux de commande reçus du dispositif d'affichage mobile (111), transférer (307) une partie du signal vidéo stocké au dispositif d'affichage mobile (111), ladite partie du signal vidéo ayant été générée pendant une période de temps couvrant au moins partiellement le moment avant ledit signal d'alarme.

7. Procédé selon la revendication 6, consistant à inclure, dans ledit signal vidéo, des données indiquant le moment dudit signal d'alarme et la correspondance entre des trames du signal vidéo et le moment dudit signal d'alarme.

8. Procédé selon la revendication 6 ou 7, consistant à stocker temporairement la partie la plus récente du signal vidéo provenant de la caméra vidéo (104) dans une mémoire tampon.

9. Procédé selon l'une quelconque des revendications 1 à 8, dans lequel le signal vidéo comprend des informations illustrées et audio.

10. Procédé selon l'une quelconque des revendications 1 à 9, dans lequel ladite connexion sans fil est l'une du groupe comprenant : le service de données à commutation de circuits à haut débit (HSCSD), le service général de radiocommunication par paquets (GPRS) et le système universel de télécommunications avec les mobiles (UMTS).

11. Station mobile (111) comprenant :
un dispositif d'affichage pour afficher une vidéo en fonction d'un signal vidéo qui est transféré à la suite d'un signal d'alarme (103) provenant d'un site surveillé (101) à la station mobile (111) sensiblement en temps réel avec la génération du signal vidéo ; et
une interface utilisateur pour permettre une sélection d'une commande provoquant l'envoi de signaux de commande à partir de la station mobile (111), dans laquelle la station mobile est configurée pour afficher sur son dispositif d'affichage une autre vidéo en fonction d'un autre signal vidéo transféré depuis un serveur vidéo (105) au site surveillé (101) à la suite desdits signaux de commande, ledit autre signal vidéo étant généré pendant une période de temps couvrant au moins partiellement le moment avant ledit signal d' alarme (103) .

12. Station mobile selon la revendication 11, comprenant en outre un moyen pour inclure la génération de signaux de commande à la suite de saisies d'utilisateur entrées au niveau du dispositif d'affichage mobile (111) après qu' au moins une partie de la vidéo est affichée sur le dispositif d'affichage mobile (111).

13. Serveur vidéo, comprenant :
une base de données de vidéos pour stocker un signal vidéo généré par une caméra vidéo (104) sur un site surveillé (101) ; et
un moyen de transfert pour transférer, à la suite d'un signal d'alarme (103) généré lors de la détection d'un événement se passant sur le site surveillé (101), le signal vidéo provenant du site surveillé (101) à un dispositif d'affichage mobile (111) sur une connexion sans fil sensiblement en temps réel avec la génération du signal vidéo, et pour transférer, à la suite de signaux de commande provenant de la station mobile (111), un autre signal vidéo extrait de la base de données de vidéos, ledit autre signal vidéo étant généré pendant une période de temps couvrant au moins partiellement le moment avant ledit signal d'alarme (103).

14. Serveur vidéo selon la revendication 13, comprenant en outre un moyen pour inclure, dans ledit signal vidéo, des données indiquant le moment dudit signal d'alarme et la correspondance entre des trames du signal vidéo et le moment dudit signal d'alarme.

15. Système pour fournir un signal vidéo à une station mobile (111) selon la revendication 11 ou 12 à partir d'un serveur vidéo (105) selon la revendication 13 ou 14, le système comprenant en outre :
un moyen de communication (106, 107) permettant une communication d'un signal vidéo depuis le site surveillé (101) à un emplacement distant ; et
au moins un détecteur (102) se trouvant sur le site surveillé (101) pour fournir le signal d'alarme (103).
